# EUROPEAN PATENT SPECIFICATION

(11) **EP 2 584 173 B1**
(45) Date of publication and mention of the grant of the patent: **16.12.2015**
(21) Application number: 12189281.4
(22) Date of filing: 19.10.2012
(51) Int. Cl.: F02C 7/32, F02C 7/36, B64C 13/50

(54) **Gas Turbine Engine**
Gasturbinenmotor
Moteur à turbine à gaz

(30) Priority: 21.10.2011 US 201113278378
(43) Date of publication of application: 24.04.2013
(73) Proprietor: United Technologies Corporation, Hartford, CT 06101 (US)
(72) Inventor: Suciu, Gabriel L., Glastonbury, CT Connecticut 06033 (US); Merry, Brian D., Andover, CT Connecticut 06232 (US); Dye, Christopher M., San Diego, CA California 92117 (US)
(74) Representative: Leckey, David Herbert

(56) References cited:
- EP-A2- 2 226 487
- US-A1- 2005 056 021
- US-A1- 2006 012 180
- US-A1- 2009 302 153
- US-A1- 2010 013 223

## Description

### BACKGROUND

The present disclosure relates to a gas turbine engine, and more particularly to engine operations during a transient condition. In particular, but not exclusively, the invention relates to a gas turbine engine.

Many aircraft produce excess power from mechanically driven electrical generation systems, and electrically-actuated systems. Aircraft typically employ APUs (Auxiliary Power Units) and IPPs (Integrated Power Packs) for generation of power during ground operation and at specific points in the flight envelope.

Excess power produced by an operating APU during ground operation or transitional stages in the flight envelope is lost to temperature increase in the APU exhaust gases. In addition, motor-actuated flight control surfaces are driven in a reverse manner by external aerodynamic loads such that the actuator motors generate power lost as heat rejected into atmosphere.

Exemplary arrangements of gas turbine engines are described in US 2005/056021, EP 2226487, US 2006/0012180 and US 2009/302153.

### SUMMARY

A gas turbine engine according to the present invention is set forth in claim 1. A method of gas turbine engine operations in accordance with the invention is set forth in claim 9.

### BRIEF DESCRIPTION OF THE DRAWINGS

Various features will become apparent to those skilled in the art from the following detailed description of the disclosed non-limiting embodiment.

The drawings that accompany the detailed description can be briefly described as follows:
Figure 1 is a schematic cross-sectional view of a gas turbine engine;
Figure 2 is a schematic cross-sectional view of the gas turbine engine within a nacelle assembly;
Figure 3 is an enlarged schematic view of a thermal system with an integrated Thermal Management System (TMS) and Environmental Control System (ECS) for the gas turbine engine;
Figure 4 is a schematic view of an accessory and thermal system driven by the gas turbine engine;
Figure 5 is a schematic view of another disclosed non-limiting embodiment of a constant speed transmission which drives an IDG, windmill pump, ECS pump and a TMS pump;
Figure 6 is a block diagram of an algorithm to absorb excess power and accelerate a low spool in response to a transient condition; and
Figure 7 is a block diagram of an algorithm to accelerate the low spool in response to excess power.

### DETAILED DESCRIPTION

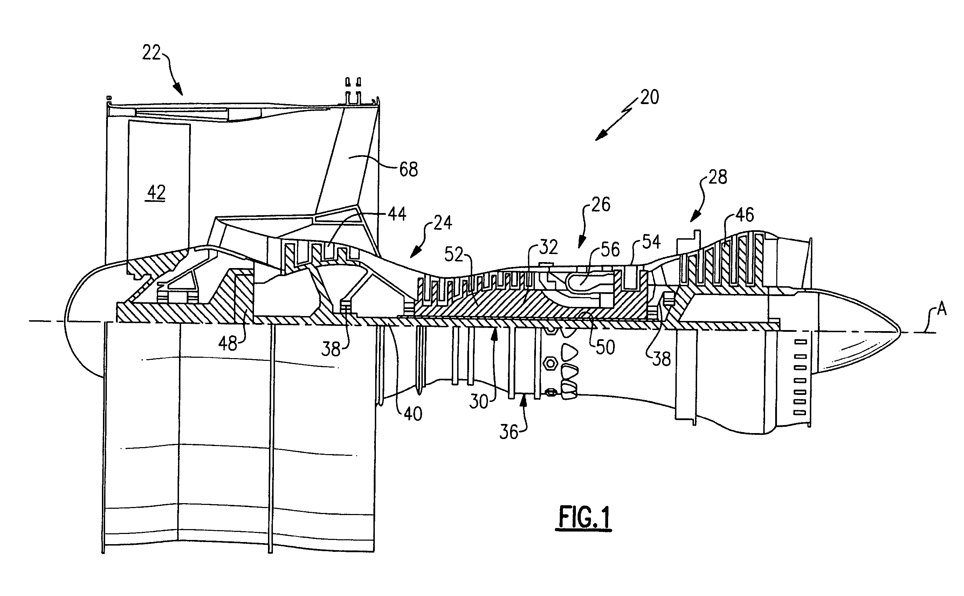

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines, such as three-spool architectures.

The engine 20 generally includes a low spool 30 and a high spool 32 mounted for rotation about an engine central longitudinal axis A relative to an engine static structure 36 via several bearing systems 38. It should be understood that various bearing systems 38 at various locations may alternatively or additionally be provided.

The low spool 30 generally includes an inner shaft 40 that interconnects a fan 42, a low pressure compressor 44 and a low pressure turbine 46. The inner shaft 40 may be connected to the fan 42 directly or through a geared architecture 48 to drive the fan 42 at a lower speed than the low spool 30 which in one disclosed non-limiting embodiment includes a gear reduction ratio of greater than 2.4:1. The high spool 32 includes an outer shaft 50 that interconnects a high pressure compressor 52 and high pressure turbine 54. A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 54, 46 rotationally drive the respective low spool 30 and high spool 32 in response to the expansion.

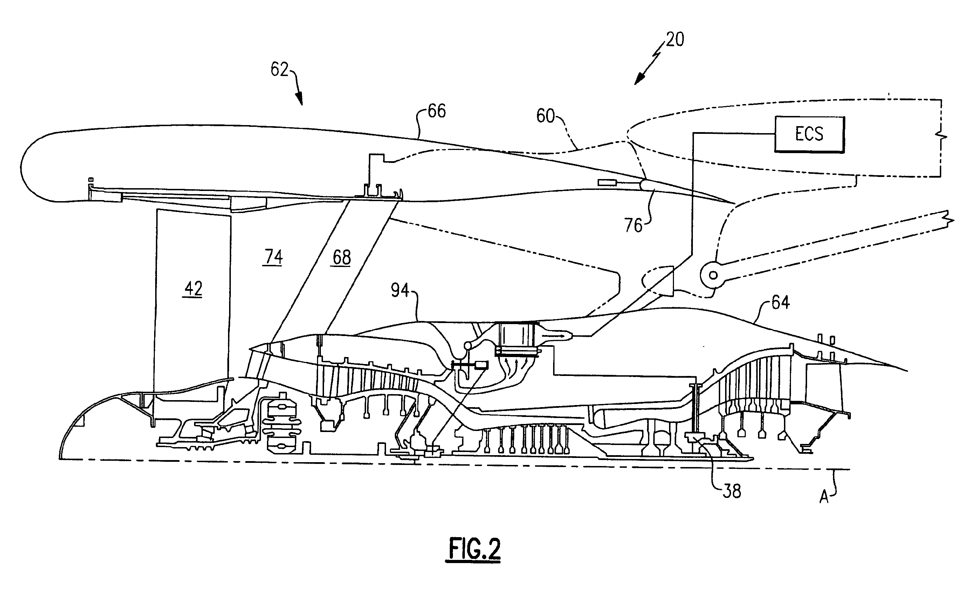

With reference to Figure 2, the gas turbine engine 20 is mounted to an engine pylon structure 60 within an engine nacelle assembly 62 as is typical of an aircraft designed for subsonic operation. The nacelle assembly 62 generally includes a core nacelle 64 and a fan nacelle 66. It should be appreciated that the core nacelle 64 and the fan nacelle 66 may be of various configuration and may be at least partially integrated adjacent to, for example, an upper bi-fi and a lower bi-fi to define what are often referred to as D-doors.

The fan nacelle 66 is at least partially supported relative to the core nacelle 64 by Fan Exit Guide Vanes (FEGVs) 68 which extend between a core case 70 and a fan case 72. The core case 70 and the fan case 72 are structural members that support the respective fan nacelle 66 and core nacelle 64 which define outer aerodynamic surfaces around the core case 70 and the fan case 72. The core case 70 is often referred to as the engine backbone and supports the rotational componentry therein. It should be understood that although a particular component arrangement is disclosed in the illustrated embodiment, various pylon structures, nacelle assemblies and engine case structures will benefit herefrom.

An annular bypass flow path 74 is defined between the fan nacelle 66 and the core nacelle 64. The engine 20 generates a high bypass flow arrangement with a bypass ratio in which approximately eighty percent of the airflow which enters the fan nacelle 66 becomes bypass flow. In the disclosed non-limiting embodiment, the bypass flow communicates through the generally annular bypass flow path 74 and may be discharged from the engine 10 through a variable area fan nozzle (VAFN) 76 which defines a variable exit area for the bypass flow.

As the fan blades within the fan section 22 are efficiently designed at a particular fixed stagger angle for an efficient cruise condition, the VAFN 76 is operated to effectively vary the fan nozzle exit area to adjust fan bypass air flow such that the angle of attack or incidence on the fan blades is maintained close to the design incidence for efficient engine operation at other flight conditions, such as landing and takeoff to thus provide optimized engine operation over a range of flight conditions with respect to performance and other operational parameters such as noise levels.

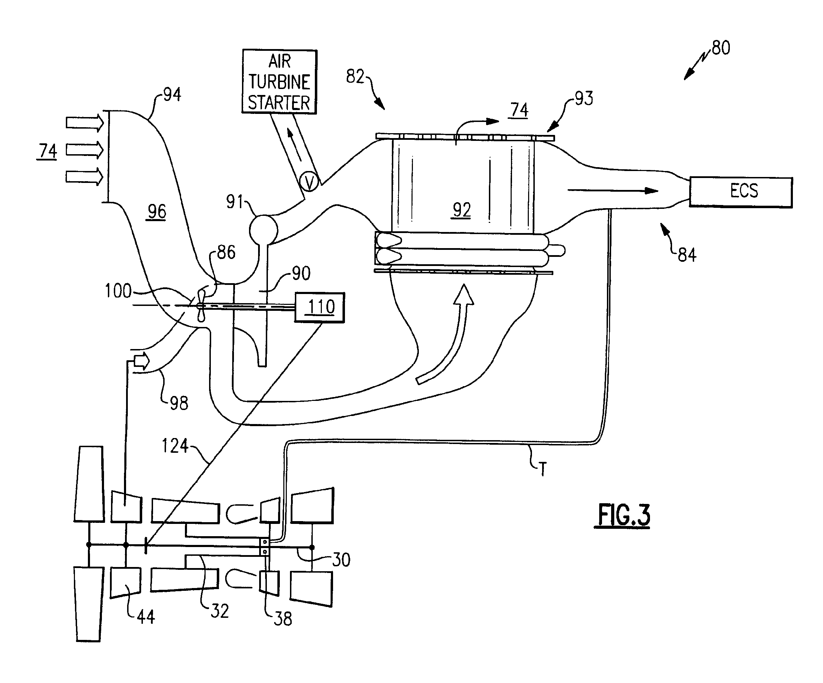

With reference to Figure 3, the engine 20 includes a thermal system 80 (illustrated schematically) powered by the low spool 30. The thermal system 80 integrates a Thermal Management System (TMS) 82 and an Environmental Control System (ECS) 84 powered by the low spool 30.

The TMS 82 generally includes a TMS pump 86 such as an axial fan and an air-oil cooler (AOC) 88 which is in fluid communication with an engine lubrication system to cool engine oil. The ECS 84 generally includes an ECS pump 90 such as an impeller within a scroll discharge 91 and an air-air precooler 92 which operates to cool air for use in the aircraft cabin. The flow passes through the air-oil cooler (AOC) 88 to cool engine oil then through the air-air precooler 92 to cool the relatively hot ECS air.

Fan bypass air from a scoop 94 within the bypass flow path 74 is selectively communicated to the TMS pump 86 and the ECS pump 90 through a bypass flow duct 96 within the core nacelle 64 (Figure 2).

Relatively hot bleed air sourced from the low pressure compressor 44 is also selectively communicated to the TMS pump 86 as well as the ECS pump 90 through a compressor flow duct 98. The compressor flow duct 98 communicates bleed air from the low pressure compressor 44. It should be appreciated that various duct and valve arrangements as may be utilized to tap the core case 70 to communicate bleed air from a multiple of circumferential locations around the low pressure compressor 44 for communication into the compressor flow duct 98.

In one disclosed, non-limiting embodiment, the ECS pump 90 may be a centrifugal pump and the TMS pump 86 may be an axial pump. The TMS pump 86 generates, for example, an approximately 1.1:1 - 1.8:1, and preferably 1.4:1, pressure ratio from the relatively low pressure ratio fan bypass flow which is sufficient to provide the relatively coldest airflow into the AOC 88, which may be approximately 200 degrees F (93°C). The relatively low pressure ratio fan bypass flow from the bypass flow path 74 is also provided to the ECS pump 90 to elevate the pressure thereof to, for example, an approximately 2:1-6:1, and preferably 4:1, pressure ratio at ground idle condition. The pressure increase provided by the ECS pump 90 also inherently increases temperature of the approximately 200 degrees F (93°C) fan bypass flow to less than 600 degrees F (316°C) for communication into the air-air precooler (PC) 92

The downstream flow from the air-oil cooler (AOC) 88, which may be approximately 300 degrees F (149°C), is communicated into the air-air precooler 92. Discharge from the air-air precooler 92, which may be less than approximately 600 degrees F (316°C), is then ejected into the annular bypass flow path 74 to provide thrust recovery. That is, the relatively lower temperature air flow downstream of the ECS pump 90, which is typically less than approximately 600 degrees F (316°C), is passed through the air-air precooler 92 and is cooled to approximately 400 degrees F (204°C) for use as aircraft air system ECS air while the relatively higher temperature air discharged from air-air precooler 92, which may be less than approximately 600 degrees F (316°C), is ejected into the annular bypass flow path 74 to provide thrust recovery. An efficient and compact thermal system 80 is thereby provided.

Utilization of the constant-speed TMS pump 86 to drive air-oil cooler (AOC) 88 air flow increases the available pressure ratio for oil cooling. Power extraction from the relatively high-inertia low spool 30 also affects engine performance less adversely than does power extraction of a similar magnitude from the high spool 32.

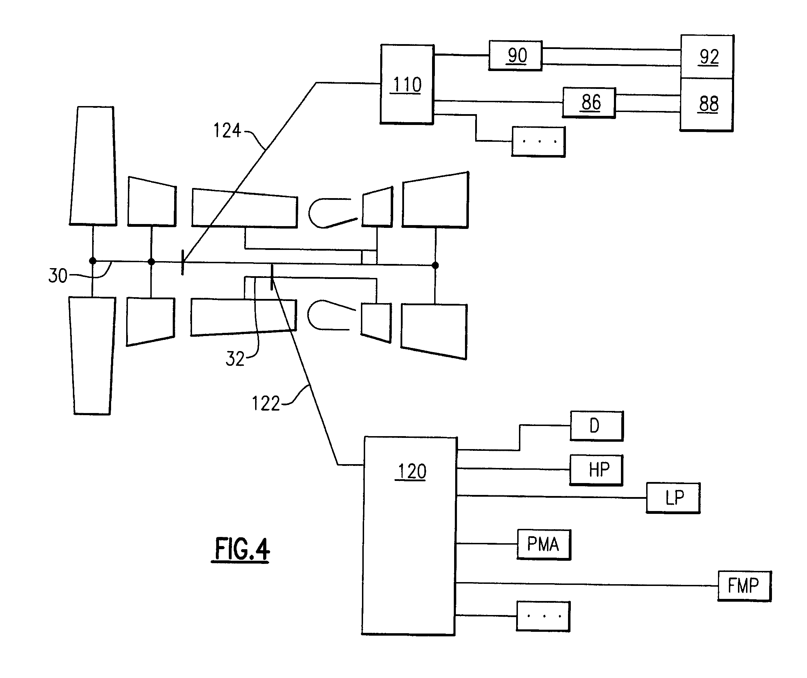

With reference to Figure 4, the high spool 32 may still be utilized to drive a relatively conventional accessory gearbox 120 to power a multiple of accessory components such as, for example, a deoiler (D), a hydraulic pump (HP), a lube pump (LP), a permanent magnet alternator (PMA), a fuel pump module (FMP), and other accessory components that may alternatively or additionally be provided.

A high towershaft 122 is geared to the high spool 32 to drive the accessory gearbox 120 at a speed that varies linearly with the speed of the high spool 32. The high spool 32 operates at speed excursions less than the low spool 30 and typically of only up to 30% between idle to max take-off conditions. Power extraction from the relatively low-inertia high spool 32 for operation of low demand accessory components minimally effects affects engine performance. That is, the thermal system 80 includes relatively high demand high power systems which are more constantly operated to provide a desired speed/mass flow as compared to the accessory components driven by the high spool 32.

Utilization of the low spool 30 driven thermal system 80 increases operating range and decrease packaging volume. Integration of the, air-air precooler 92 into the common cooling/exit stream of the Air-Oil Cooler (AOC) 88 provides thrust recovery of the air-air precooler 92 discharge as compared to legacy configurations that dump precooler discharge flow overboard outside the fan bypass duct typically through the pylon fairing "thumbnail" or similar aircraft surface exposed to free stream air which negates thrust recovery benefits.

The dedicated ECS subsystem relieves the high spool 32 from inefficiencies and distortion due to bleeds at design such as a cruise flight condition and off-design points such as a non-cruise flight condition. ECS mass flow is approximately 1 lb. per second, and efficiency gains from not bleeding this air from the high pressure compressor are about +2% HPC efficiency if power is instead extracted from the low spool, with reduced distortion due to lack of environmental control system bleeds. Exhaust gas temperature (EGT) at idle may also decrease by more than 230 degrees F. Overall system weight also decreases due to the reduced ducting. Accordingly, valuable externals packaging space is facilitated by the reduction and integration of the TMS and ECS. Further, mechanical complexity is reduced to increase reliability as well as reduce cost and maintenance requirements.

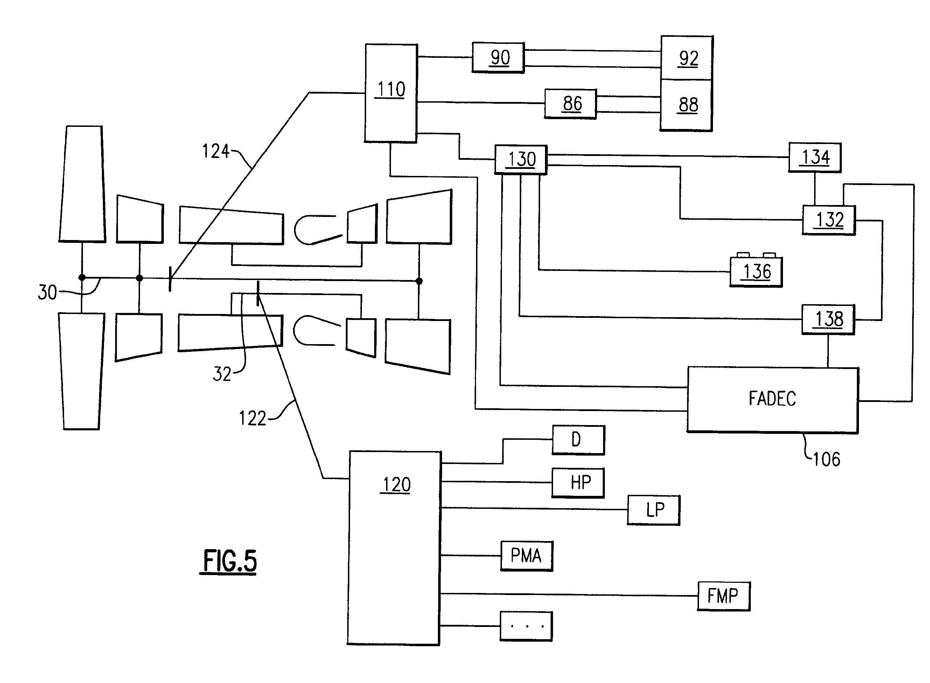

With reference to Figure 5, another disclosed non-limiting embodiment connects an integrated drive generator (IDG) 130 to the constant speed transmission 110. It should be appreciated that additional or alternative components and systems may be driven by the constant speed transmission 110. In the disclosed non-limiting embodiment, the integrated drive generator (IDG) 130 is an AC motor/generator single device capable of operations in either a motoring mode (i.e., converting electrical energy to motive energy) or a generator mode (i.e., converting motive energy to electrical energy).

Under on-power operation, the integrated drive generator (IDG) 130 is driven by the low spool 30 through the constant speed transmission 110 to generate electrical power. As low spool 30 speed varies throughout the ground service and flight envelope, the gear ratio of the constant speed transmission 110 is varied accordingly to maintain and essentially constant speed to drive the integrated drive generator (IDG) 130. The integrated drive generator (IDG) 130 may thereby power various electrical loads 132. It should be understood that various other electrical components and subsystems such as a power conditioner 134, an energy storage system 136 and electric motors 138 which provide the motive force to drive mechanical loads such as aircraft flight control surfaces.

The electrical motors 138 have the potential to generate electrical energy when motive force provided by the load (e.g., on the aircraft flight control surfaces) drives the motor 138. In general, motors and generators are structurally the same, with only the direction of power determining whether the device operates as a motor (converting electrical energy to mechanical energy) or a generator (converting mechanical energy to electrical energy). Thus, a motor connected to drive mechanical loads such as aircraft flight control surfaces may be driven as a generator when the aircraft flight control surfaces provide motive force back onto the motor.

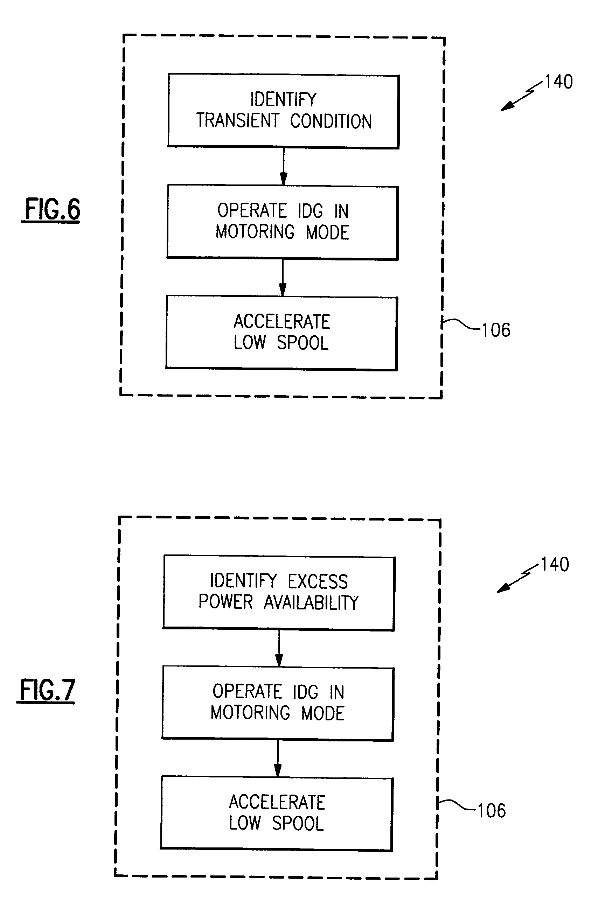

The controller 106, such as a FADEC in communication with the gas turbine engine 20, is also in communication with the integrated drive generator (IDG) 130. The controller 106 provides the logic and cross-communication between the gas turbine engine 20 and the integrated drive generator (IDG) 130 for operations such as those disclosed in the logic diagram of Figures 6 and 7.

With reference to Figure 6, the controller 106 executes an excess power algorithm 140. The functions of the algorithm 140 are disclosed in terms of functional block diagrams, and it should be understood by those skilled in the art with the benefit of this disclosure that these functions may be enacted in either dedicated hardware circuitry or programmed software routines capable of execution in a microprocessor based electronics control embodiment. In one non-limiting embodiment, the controller 106 may be a portion of a flight control computer, a portion of a central vehicle control, an interactive vehicle dynamics module, a stand-alone line replaceable unit or other module incorporated, for example, in the FADEC as previously described.

Under a transient condition, the low spool 32 may be subject to instability such as a surge. Surge is an axisymmetric oscillation of the flow through the compressor that can include reverse flow during a portion of the surge cycle. In a severe surge cycle, the reversed flow through the compressor can extinguish combustion, and potentially result in a "flame out" or loss of engine power.

To assure compressor stability, the engine 20 is designed with a surge margin in which the operating point remains a specified distance from the surge line on the performance map. Large surge margins are employed due to transient conditions that may move the compressor operating point closer to the surge line. However, a large surge margin that places the compressor operating line far from the surge line can preclude operation at a peak pressure rise or maximum efficiency region.

The controller 106 is operable to identify the instability condition and operate the integrated drive generator (IDG) 130 in a motoring mode (i.e., converting electrical energy to motive energy) powered by, for example, the energy storage system 136 and electric motors 138 to power the constant speed transmission 110 and thereby increase horsepower to the low spool 30 through the towershaft 124. The added horsepower accelerates the low spool 30 and thereby moves the compressor operating point away from the surge line to more quickly or completely eliminate the instability condition.

It should be appreciated that the excess power from the, for example, electrical motors 138 may be utilized to accelerate the low spool 30 during normal operation (Figure 7). That is, transient conditions associated with, for example, flight control surfaces may generate excess power which may be readily utilized to supplement low spool 30 rotation to thereby increase engine operational efficiency.

The low spool 30 driven IDG 132 is relatively much less susceptible to operability issues due to speed excursions and significant power fluctuations. The low spool 30 driven IDG 132 also facilitates the recovery of useful electrical energy which is otherwise wasted as heat in typical aircraft installations with only additional control logic in the power switching circuitry to minimize operational instabilities without weight impact.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A gas turbine engine (20) comprising:
a spool (30); and
an Integrated Drive Generator (IDG) (130) geared to said spool (30) to selectively accelerate said spool during a transient condition;
**characterised in that**:
said Integrated Drive Generator (IDG) (130) is geared to said spool (30) through a constant speed transmission (110);
said gas turbine engine (20) further comprises a thermal system (80) wherein said thermal system (80) comprises a Thermal Management System (82) and an Environmental Control System (84) powered by said spool (30) through said constant speed transmission (110); and
said spool (30) is a low spool (30).

2. The gas turbine engine as recited in claim 1, wherein said spool (30) is within a three spool engine.

3. The gas turbine engine as recited in claim 1 or 2, further comprising a controller (106) operable to identify said transient condition.

4. The gas turbine engine as recited in any preceding claim, further comprising a towershaft (124) geared to said spool (130), said constant speed transmission (110) driven by said towershaft (124).

5. The gas turbine engine as recited in any preceding claim, wherein said transient condition is a surge condition.

6. The gas turbine engine as recited in any preceding claim, wherein said transient condition is an excess power condition.

7. The gas turbine engine as recited in any preceding claim, further comprising an electric motor (138) operable to power said Integrated Drive Generator (IDG) (130) in response to a motive force.

8. The gas turbine engine as recited in claim 7, wherein said motive force is generated by an aircraft flight control surface, and wherein, optionally, said electric motor (138) drives said aircraft flight control surface, said electric motor (138) operates as a generator in response to a force applied to said aircraft flight control surface.

9. A method of gas turbine engine operations during a transient condition comprising:
accelerating a low spool (30) in response to a transient condition with an Integrated Drive Generator (IDG) (130); said method **characterised by**:
accelerating the low spool (30) through a constant speed transmission (110) geared to the low spool (30); and
powering a thermal system (80), wherein said thermal system (80) comprises a Thermal Management System (82) and an Environmental Control System (84) powered by said low spool (30) through said constant speed transmission (110).

10. The method as recited in claim 9, further comprising:
identifying the transient condition with a FADEC (106).

11. The method as recited in claim 9 or 10, further comprising:
identifying a surge as the transient condition.

12. The method as recited in any of claims 9 or 10, further comprising:
identifying an excess power condition as the transient condition.

13. The method as recited in claim 12, wherein the excess power is obtained from a motor (138) driven flight control surface.

## Patentansprüche

1. Gasturbinenmotor (20), umfassend:
eine Welle (30); und
einen integrierten Antriebsgenerator (IDG) (130), der mit der Welle (30) verzahnt ist, um die Welle während eines Übergangszustands selektiv zu beschleunigen;
**dadurch gekennzeichnet, dass**:
der integrierte Antriebsgenerator (IDG) (130) durch ein Konstantdrehzahlgetriebe (110) mit der Welle (30) verzahnt ist;
wobei der Gasturbinenmotor (20) ferner ein Wärmesystem (80) umfasst, wobei das Wärmesystem (80) ein Wärmemanagementsystem (82) und ein Umweltsteueurungssystem (84) umfasst, die von der Welle (30) durch das Konstantdrehzahlgetriebe (110) mit Energie versorgt werden; und
wobei die Welle (30) eine Niederdruckwelle (30) ist.

2. Gasturbinenmotor nach Anspruch 1, wobei die Welle (30) innerhalb eines Dreiwellenmotors ist.

3. Gasturbinenmotor nach Anspruch 1 oder 2, ferner umfassend eine Steuereinrichtung (106), die betriebsfähig ist, um den Übergangszustand zu erkennen.

4. Gasturbinenmotor nach einem der vorangehenden Ansprüche, ferner umfassend eine Schachtwelle (124), die mit der Welle (130) verzahnt ist, wobei das Konstantdrehzahlgetriebe (110) von der Schachtwelle (124) angetrieben wird.

5. Gasturbinenmotor nach einem der vorangehenden Ansprüche, wobei der Übergangszustand ein Stromstoßzustand ist.

6. Gasturbinenmotor nach einem der vorangehenden Ansprüche, wobei der Übergangszustand ein Zustand mit überschüssiger Leistung ist.

7. Gasturbinenmotor nach einem der vorangehenden Ansprüche, ferner umfassend einen Elektromotor (138), der betriebsfähig ist, um den integrierten Antriebsgenerator (IDG) (130) in Reaktion auf eine Bewegungskraft mit Energie zu versorgen.

8. Gasturbinenmotor nach Anspruch 7, wobei die Bewegungskraft von einer Flugzeugflugsteuerfläche erzeugt wird, und wobei wahlweise der Elektromotor (138) die Flugzeugflugsteuerfläche antreibt, wobei der Elektromotor (138) in Reaktion darauf, dass eine Kraft auf die Flugzeugflugsteuerfläche ausgeübt wird, als ein Generator arbeitet.

9. Verfahren für Gasturbinenmotorbetrieb während eines Übergangszustands, umfassend:
Beschleunigen einer Niederdruckwelle (30) in Reaktion auf einen Übergangszustand mit einem integrierten Antriebsgenerator (IDG) (130); wobei das Verfahren **gekennzeichnet ist durch**:
Beschleunigen der Niederdruckwelle (30) **durch** ein Konstantdrehzahlgetriebe (110), das mit der Niederdruckwelle (30) verzahnt ist; und
Versorgen eines Wärmesystems (80) mit Energie, wobei das Wärmesystem (80) ein Wärmemanagementsystem (82) und ein Umweltsteueurungssystem (84) umfasst, die von der Welle (30) **durch** das Konstantdrehzahlgetriebe (110) mit Energie versorgt werden.

10. Verfahren nach Anspruch 9, ferner umfassend:
Erkennen des Übergangszustands mit einem FADEC (106).

11. Verfahren nach Anspruch 9 oder 10, ferner umfassend:
Erkennen eines Stromstoßes als den Übergangszustand.

12. Verfahren nach Anspruch 9 oder 10, ferner umfassend:
Erkennen eines Zustands mit überschüssiger Leistung als den Übergangszustand.

13. Verfahren nach Anspruch 12, wobei die überschüssige Leistung von einer durch einen Motor (138) angetriebenen Flugsteuerfläche erhalten wird.

## Revendications

1. Moteur à turbine à gaz (20) comprenant :
un cylindre (30) ; et
un générateur à entraînement intégré (IDG) (130) couplé audit cylindre (30) pour accélérer de manière choisie ledit cylindre lors d'un état transitoire ;
**caractérisé en ce que** :
ledit générateur à entraînement intégré (IDG) (130) est couplé audit cylindre (30) par le biais d'une transmission à vitesse constante (110) ;
ledit moteur à turbine à gaz (20) comprend en outre un système thermique (80), ledit système thermique (80) comprenant un système de gestion thermique (82) et un système de commande environnementale (84) alimenté par ledit cylindre (30) par le biais de ladite transmission à vitesse constante (110) ; et
ledit cylindre (30) étant un cylindre bas (30).

2. Moteur à turbine à gaz selon la revendication 1, dans lequel ledit cylindre (30) se trouve dans un moteur à trois cylindres.

3. Moteur à turbine à gaz selon la revendication 1 ou 2, comprenant en outre un contrôleur (106) qu'on peut actionner pour identifier ledit état transitoire.

4. Moteur à turbine à gaz selon l'une quelconque des revendications précédentes, comprenant en outre une tige de tour (124) couplée audit cylindre (130), ladite transmission à vitesse constante (110) étant entraînée par ladite tige de tour (124).

5. Moteur à turbine à gaz selon l'une quelconque des revendications précédentes, ledit état transitoire étant un état de surtension.

6. Moteur à turbine à gaz selon l'une quelconque des revendications précédentes, ledit état transitoire étant un état de puissance excessive.

7. Moteur à turbine à gaz selon l'une quelconque des revendications précédentes, comprenant en outre un moteur électrique (138) pouvant servir à alimenter ledit générateur à entraînement intégré (IDG) (130) en réponse à une force motrice.

8. Moteur à turbine à gaz selon la revendication 7, ladite force motrice étant produite par une surface de contrôle de vol d'aéronef, et où, en option, ledit moteur électrique (138) entraîne ladite surface de commande de vol d'aéronef, ledit moteur électrique (138) fonctionnant comme générateur en réponse à une force appliquée à ladite surface de commande de vol d'aéronef.

9. Procédé de fonctionnement d'un moteur à turbine à gaz lors d'un état transitoire, comprenant :
l'accélération d'un cylindre bas (30) en réponse à un état transitoire avec un générateur à entraînement intégré (IDG) (130) ; ledit procédé **se caractérisant par** :
l'accélération du cylindre bas (30) par le biais d'une transmission à vitesse constante (110) couplée au cylindre bas (30) ; et
l'alimentation d'un système thermique (80), ledit système thermique (80) comprenant un système de gestion thermique (82) et un système de contrôle environnemental (84) alimenté par ledit cylindre (30) par le biais de ladite transmission à vitesse constante (110).

10. Procédé selon la revendication 9, comprenant en outre :
l'identification de l'état transitoire avec un FADEC (106).

11. Procédé selon la revendication 9 ou 10, comprenant en outre :
l'identification d'une surtension en tant qu'état transitoire.

12. Procédé selon la revendication 9 ou 10, comprenant en outre :
l'identification d'un état de puissance excessive en tant qu'état transitoire.

13. Procédé selon la revendication 12, dans lequel la puissance excessive s'obtient à partir d'une surface de commande de vol entraînée par le moteur (138).
